**Europäisches Patentamt**

**European Patent Office**

**Office européen des brevets**

(11) Veröffentlichungsnummer: **0 066 849**
**B1**

## (12) EUROPÄISCHE PATENTSCHRIFT

(45) Veröffentlichungstag der Patentschrift:
**20.03.85**

(21) Anmeldenummer: **82104876.6**

(22) Anmeldetag: **03.06.82**

(51) Int. Cl.⁴: **B 23 Q 7/04**, B 65 G 47/90

54 Handhabungssystem für Werkstücke.

(30) Priorität: **10.06.81 DE 3123029**

(43) Veröffentlichungstag der Anmeldung:
**15.12.82 Patentblatt 82/50**

(45) Bekanntmachung des Hinweises auf die Patenterteilung:
**20.03.85 Patentblatt 85/12**

(84) Benannte Vertragsstaaten:
**CH FR GB IT LI**

56 Entgegenhaltungen:
**DE - A - 1 957 608**
**DE - A - 3 133 205**
**FR - A - 2 434 686**

(73) Patentinhaber: **MAHO WERKZEUGMASCHINENBAU BABEL & CO., Postfach 1280, D-8962 Pfronten (DE)**

(72) Erfinder: **Weck, Manfred, Prof. Dr.-Ing., Im Weingarten 16, D-5100 Aachen (DE)**
Erfinder: **Klingel, Hans, Ing. grad., Teckstrasse 91, D-7141 Möglingen (DE)**
Erfinder: **Werntze, Georg Dr.-Ing., Koppenalmweg 3, D-8959 Hopfen (DE)**

(74) Vertreter: **Patentanwälte Beetz sen. - Beetz jun. Timpe - Siegfried - Schmitt-Fumian, Steinsdorfstrasse 10, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine lösbare, einspannbare Halterung mit einem Griffteil zum Handhaben leichtgewichtiger Werkstücke.

Eine solche Halterung ist mit der DE-A-1 957 608 bekannt geworden. Sie dient vorwiegend dem Einspannen von Werkstücken zum Zwecke der Bearbeitung.

Im Zuge der Automatisierung von Bearbeitungsvorgängen in Werkzeugmaschinen stellt der Transport der Werkstücke sowie ihre Zu- und Abführung in die einzelnen Bearbeitungsstationen einer oder mehrerer Werkzeugmaschinen ein erhebliches Problem dar, das bisher nur mit einem technisch ausserordentlich hohen Aufwand gelöst werden konnte. Die Schwierigkeiten ergaben sich in erster Linie durch die Vielgestalt der Formen von unterschiedlichen Werkstücken, welche in Serien auf den Werkzeugmaschinen bearbeitet werden. Diese unterschiedliche Form der Werkstücke erfordert ausserordentlich komplizierte Greifwerkzeuge an den Armen der Manipulatoren sowie auch einen erheblichen Steuerungsaufwand, da für den Automatik-Betrieb für jede Werkstückserie ein gesondertes Steuerungs-Programm für die Bewegungsabläufe der Manipulatoren bzw. ihrer Greiferarme notwendig war. Besondere Probleme stellten sich, wenn sog. «Geister-Schichten» gefahren werden sollen, d.h. wenn die gesamten Bearbeitungsvorgänge nicht nur einer Werkzeugmaschine sondern auch mehrerer in ein Bearbeitungssystem integrierter Maschinen sowie die Zu- und Abführung der Werkstücke inklusive einer oder mehrerer Zwischenspeicherungen vollautomatisch und mit Selbstüberwachung ablaufen sollen.

Aufgabe der Erfindung ist es, ein Handhabungs- und Transportsystem für Werkstücke der eingangs genannten Gattung zu schaffen, bei dem konstruktiv und funktional einfache Greifwerkzeuge für Werkstücke von unterschiedlichsten Formen eingesetzt werden können.

Erfindungsgemäss wird diese Aufgabe durch die Merkmale im kennzeichnenden Teil von Anspruch 1 gelöst.

Durch die Erfindung wird erreicht, dass die Greifwerkzeuge der Manipulatoren als einfache Zangen ausgebildet werden können, die völlig unabhängig von der jeweiligen Form und Grösse der verschiedenen Werkstücke eine sichere Halterung der Werkstücke während des Transports bzw. der verschiedenen Ablegevorgänge gewährleistet. Die konstruktiv einfachen Griffteile werden an leicht zugänglichen Aussenflächen der einzelnen Werkstücke in vorgegebenen Positionen lösbar befestigt, was in besonders zweckmässiger Weise durch Kleben erfolgen kann. Sie bleiben mit dem jeweiligen Werkstück während der verschiedenen Bearbeitungszyklen fest verbunden und werden erst nach Beendigung aller Bearbeitungsvorgänge durch beispielsweise Abschlagen vom Werkstück gelöst.

Das erfindungsgemässe Handhabungs- und Transport-System ist für die spanende Bearbeitung von Werkstücken in mehreren Bearbeitungszentren innerhalb einer Bearbeitungsstrasse besonders geeignet, bei welchen aufgrund der besonderen Funktionsweise der Werkstückspanneinrichtungen für die Zuführung und auch die Ablage von Werkstücken keine übermässig hohen Anforderungen gestellt werden, da die genaue Positionierung und Ausrichtung der Werkstücke durch die maschineneigenen Spannmittel selbst erfolgt.

Die einzelnen Griffteile können auf unterschiedlichste Weise, z.B. als Haken, Zapfen oder Profilteile ausgebildet sein.

Als besonders zweckmässig hat sich jedoch ein Griffteil in Form eines hohlen Bolzens erwiesen, der mit einem verbreiterten flachen Fuss auf die jeweils geeignete Fläche des Werkstückes aufgeklebt wird. Dabei dient der Innenraum des Hohlbolzens zur Aufnahme eines Klebstoffes. Um eine feste und sichere Halterung der einzelnen Werkstücke an dem als Zange ausgebildeten Greifwerkzeug sicherzustellen, weisen die Bolzen einen schmalen Mittelteil mit einem oder mehrerer Ringflanschen sowie einen verbreiterten Kopf auf. Durch diese Ausgestaltung wird ein Formschluss zwischen den Zangenbacken und dem jeweiligen Bolzen erreicht, was eine sichere und feste Führung auch bei abrupten Bewegungsänderungen des Manipulator-Greiferarmes ermöglicht.

Im folgenden wird ein Ausführungsbeispiel der Erfindung anhand der Zeichnung im einzelnen erörtert. Es zeigen:

Fig. 1 eine Vielzahl von in einem Magazin abgelegten Werkstücken mit daran befestigten Griffteilen und mit einem Greiferarm des Manipulators in perspektivischer Darstellung;

Fig. 2 einen an der Oberfläche eines Werkstückes angeklebten Bolzen im Längsschnitt.

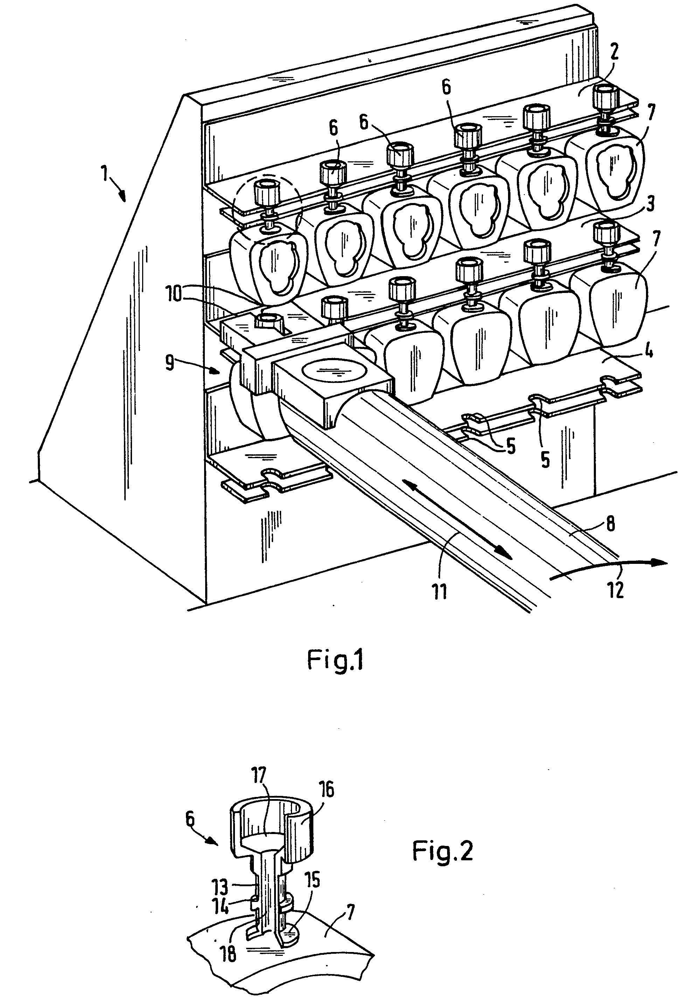

Wie aus Fig. 1 ersichtlich, sind in einem Magazin 1 drei Reihen von Werkstückhaltern 2, 3, 4 in Form von beabstandeten Doppelplatten angeordnet, die eine Vielzahl von einseitig offenen Ausnehmungen 5 zum Einhängen der an Bolzen 6 befestigten Werkstücke 7 aufweisen. Der Greiferarm 8 eines — nicht dargestellten — Manipulators trägt an seinem vorderen Ende eine Greifzange 9, deren beide Greifbacken 10 den von der Oberfläche der Werkstücke 7 abstehenden Bolzen beidseitig umfassen. Dieser Greiferarm 8 des Manipulators ist in Richtung der Pfeile 11, 12 bewegbar und damit in der Lage, die Werkstücke 7 zusammen mit den daran angeklebten Bolzen 6 aus dem Magazin 1 herauszunehmen und sie zu weiteren Bearbeitungs- bzw. Speicherstationen zu transportieren.

Jede der in Fig. 2 im einzelnen dargestellten Bolzen 6 weist einen schmalen Mittelteil 13 mit einem Ringflansch 14 sowie einem scheibenförmigen Fuss 15 und einem verbreiterten hohlzylindrischen Kopf 16 auf. Der Innenraum 17 der Bolzen 6 dient zur Aufnahme eines geeigneten Klebstoffes, z.B. eines Duroplasten 18. Die untere Fläche des scheibenförmigen Fusses 15 ist z.B. nach innen gewölbt ausgebildet, damit eine ausreichende Klebstoffmenge aus dem Bolzeninnenraum 17 in den Raum zwischen dieser gewölbten Fussfläche und der Oberfläche des Werkstückes 7 eindringen kann, um eine sichere und gleichzeitig lösbare Verbindung zwischen dem Bolzen 6 und dem Werkstück 7 auch bei einem unebenen Verlauf der Werkstück-Oberfläche sicherzustellen.

Zur Befestigung eines in Fig. 2 im einzelnen dargestellten Bolzens 6 an der Oberfläche des Werkstückes 7 wird der Duroplast mittels z.B. einer Spritzpistole in den Innenraum des auf der Oberfläche des Werkstückes 7 aufgesetzten Bolzens eingespritzt. Dabei ist der Klebstoff hinsichtlich seiner Klebeigenschaften und Konsistenz so gewählt, dass er nach einigen Sekunden aushärtet und eine feste Verbindung zwischen dem Bolzen 6 und dem Werkstück 7 herstellt. Es ist jedoch möglich, den Innenraum des Bolzens 6 als Klebstoff-Speicher zu verwenden, um den Bolzen wiederholt bei Werkstücken verschiedener Art ohne vorherige Reinigungs-Behandlung einsetzen zu können. Dabei bietet sich als Klebstoff ein Thermoplast an, der durch einfache Erwärmung des Bolzens wieder fliessfähig wird und gleichzeitig seine Klebefähigkeit wieder erlangt.

Nachdem die Werkstücke 7 verschiedene Stationen und Bearbeitungsvorgänge durchlaufen haben, müssen die Bolzen 6 von den Fertigteilen entfernt werden. Dies erfolgt auf einfache Weise durch einen seitlichen Schlag auf den Bolzen, durch welchen die Klebeverbindung gelöst wird. Je nach den Eigenschaften der Klebstoffe kann das Lösen der Bolzen 6 von den Werkstücken 7 auch auf andere Weise, z.B. durch kurzzeitiges Erwärmen oder durch Zuführen eines Lösungsmittels gelöst werden.

**Patentansprüche**

1. Lösbare, einspannbare Halterung mit einem Griffteil zum Handhaben leichtgewichtiger Werkstücke (7), dadurch gekennzeichnet, dass zum Erfassen der Werkstücke (7) mit an dem Ladearm eines Manipulators angeordneten Greifern um sie in vorgegebene Positionen von Bearbeitungs- und/oder Magazinstationen zu transportieren der Griffteil an den Werkstücken (7) lösbar angeklebt und in Form eines hohlen Bolzens (6) ausgebildet ist, der einen verbreiterten Fuss (5) mit nach innen gewölbter Stirnfläche, einen schmalen Mittelteil sowie einen verbreiterten hohlzylindrischen Kopf (16) aufweist und dessen Innenraum mit Klebstoff (18) gefüllt ist.

2. Halterung nach Anspruch 1, dadurch gekennzeichnet, dass der im Inneren des Hohlbolzens (6) und des Kopfes (16) vorgesehene Klebstoff (18) ein Duroplast ist.

**Claims**

1. Removable holding means adapted to be clamped and including a handle for manipulating light-weight work-pieces (7), characterized in that, for gripping the work-piece (7) with gripping means mounted on the loading arm of a manipulator so as to transfer said work-pieces to pretedermined positions of machining and/or magazine stations, the handle is removably bonded to the work-pieces (7) and is configured as a hollow bolt (6) including an enlarged foot portion (15) with an inwardly curved end face, a narrow central portion, and a wider hollow-cylindrical head (16), the interior of said bolt being filled with adhesive (18).

2. Holding means as claimed in claim 1, characterized in that the adhesive (18) disposed in the interior of the hollow bolt (6) and of the head (16) is a thermosetting plastic.

**Revendications**

1. Fixation démontable destinée à manipuler des pièces légères (7) qui peut être tenue par serrage et qui comprend un élément de prise, caractérisée en ce que, pour saisir les pièces (7) à l'aide de pinces montées sur le bras de charge d'un manipulateur, pour les transporter dans des positions prévues de postes d'usinage et/ou de stockage, l'élément de prise est collé aux pièces (7) par une liaison démontable et est réalisé sous la forme d'une tige creuse (6) qui présente un pied élargi (5) muni d'une surface frontale incurvée vers l'intérieur, une partie moyenne étroite, ainsi qu'une tête cylindrique creuse élargie (16), et dont la cavité intérieure est remplie de colle (18).

2. Fixation selon la revendication 1, caractérisée en ce que la colle (18) prévue à l'intérieur de la tige creuse (6) et de la tête (16) est un thermodurcissable.

Fig.1

Fig.2

5